# EUROPÄISCHE PATENTANMELDUNG

(11) **EP 1 952 927 A1**
(43) Veröffentlichungstag der Anmeldung: **06.08.2008**
(21) Anmeldenummer: 08000988.9
(22) Anmeldetag: 19.01.2008
(51) Int. Cl.: B23F 23/06, B23F 23/12, B23Q 3/18

(54) **Verfahren zum Ausrichten eines Werkstücks in einer Werkzeugmaschine und Werkzeugmaschine**

(30) Priorität: 02.02.2007 DE 102007005252
(71) Anmelder: NILES Werkzeugmaschinen GmbH, 12681 Berlin (DE)
(72) Erfinder: Maschirow, Boris, 13125 Berlin (DE)
(74) Vertreter: Gosdin, Michael

(57) **Zusammenfassung**

Die Erfindung betrifft ein Verfahren zum spanenden Bearbeiten eines Werkstücks (1) in einer Werkzeugmaschine (2), wobei das Werkstück (1) auf einem Rundtisch (3) angeordnet und zur spanenden Bearbeitung um eine vertikale Achse (z) des Rundtisches (3) gedreht wird und wobei das Werkstück (1) vor der spanenden Bearbeitung zur Achse (z) des Rundtisches (3) ausgerichtet wird. Um in einfacher und präziser Weise das Werkstück auf dem Rundtisch auszurichten, sieht die Erfindung die Schritt vor: a) Platzieren des Werkstücks (1) auf einer auf dem Rundtisch (3) angeordneten Verstellvorrichtung (4), die mindestens ein erstes Trägerelement (5) und mindestens ein zweites Trägerelement (6) aufweist; b) Positionieren der beiden Trägerelemente (5, 6) relativ zueinander in eine Referenzposition (R₀); c) Messen der Lage (φ) und Größe (e) der Exzentrizität des Werkstücks (1), insbesondere einer Referenzfläche (7, 7') des Werkstücks (1), zur vertikalen Achse (z) mittels eines in die Werkzeugmaschine (2) integrierten Sensors (8); d) Verschieben des zweiten Trägerelements (6) relativ zu dem ersten Trägerelement (5) in eine Richtung senkrecht zur vertikalen Achse (z) durch einen Aktuator (9), so dass die Größe (e) der Exzentrizität minimal wird; e) Durchführung der spanenden Bearbeitung des Werkstücks (1). Des Weiteren betrifft die Erfindung eine Werkzeugmaschine.

## Beschreibung

Die Erfindung betrifft ein Verfahren zum spanenden Bearbeiten eines Werkstücks in einer Werkzeugmaschine, wobei das Werkstück auf einem Rundtisch angeordnet und zur spanenden Bearbeitung um eine vertikale Achse des Rundtisches gedreht wird und wobei das Werkstück vor der spanenden Bearbeitung zur Achse des Rundtisches ausgerichtet wird. Des Weiteren betrifft die Erfindung eine Werkzeugmaschine.

Insbesondere bei der Zahnradfertigung und dort bei der Feinbearbeitung der Verzahnung werden im Falle größerer Zahnräder häufig Schleifmaschinen eingesetzt, die das zu bearbeitende Zahnrad so aufnehmen, dass dessen Drehachse vertikal ausgerichtet auf einem Rundtisch ist. Vor dem Durchführen der spanenden Bearbeitung des Zahnrads oder auch von anderen Funktionsflächen des Werkstücks ist es erforderlich, das Werkstück auf dem Rundtisch so auszurichten, dass die Drehachse des Werkstücks mit der vertikalen Achse des Rundtisches möglichst gut übereinstimmt. Nur so kann ein befriedigendes Schleifergebnis erzielt werden.

Angestrebt wird dabei, dass der Ausrichtvorgang möglichst schnell und genau von statten gehen kann.

Es ist bekannt, zum Ausrichten des Werkstücks auf dem Rundtisch eine Messuhr zu verwenden, die an einer Referenzfläche (Prüf-Durchmesser) angesetzt wird. Durch Verschieben des Werkstücks senkrecht zur vertikalen Achse wird das Werkstück präzise positioniert und das jeweilige Ergebnis mit der Messuhr geprüft. Problematisch ist bei großen und damit schweren Werkstücken die relativ hohe Reibung zwischen Werkstück samt Spannmittel und Drehtisch. Das Verschieben erfolgt dabei je nach Gesamtgewicht mit leichten Hammerschlägen oder durch ein Verschieben des Werkstücks über Stellschrauben und ein nachfolgendem Anziehen von Befestigungsschrauben. So wird die erzielte genaue Position des Werkstücks auf dem Rundtisch fixiert. Um die teilweise sehr großen Reibungskräfte zu minimieren, sind relativ aufwändige Gewichtsentlastungsmaßnahmen bekannt geworden, die jedoch stets einen hohen apparativen Aufwand darstellen.

Nachteilig ist bei dieser vorbekannten Verfahrensweise zum Ausrichten des Werkstücks, dass stets ein personeller Aufwand zu treiben ist, was das Ausrichten aufwändig und den Herstellprozess teuer macht. Ferner ist das Ausrichtergebnis von der Fähigkeit der Person abhängig, die das Ausrichten vornimmt, so dass insofern Qualitätsunterschiede im Endergebnis beobachtet werden. Der Aufwand zum Ausrichten wird häufig zugunsten der Durchlaufzeiten und zuungunsten der Ausrichtqualität der Werkstücke gering gehalten.

Eine alternative Vorgehensweise zur Bearbeitung eines Werkstücks auf einem Rundtisch stellt auf folgenden Ansatz ab: Die Maschine führt bei der Bearbeitung des Werkstücks eine vorher ermittelte Exzentrizität mit Hilfe ihrer NC-Achsen kinematisch nach, ohne dass das Werkstück körperlich exakt auf dem Rundtisch ausgerichtet würde. Nachteilig ist bei dieser Lösung, dass eine komplizierte und aufwändige Software für die Maschinensteuerung benötigt wird und dass dynamische Grenzen bei der Realisierung der Ausgleichsbewegungen mit hohen Verfahrgeschwindigkeiten bestehen.

Der Erfindung liegt daher die **Aufgabe** zugrunde, ein grob vorzentriertes Werkstück ohne manuellen Aufwand gezielt und damit effizient auf dem Rundtisch der Werkzeugmaschine auszurichten; das Ausrichten soll also möglichst ohne personellen Aufwand vorgenommen werden können, also weitgehend automatisiert in der Maschine. Angestrebt wird dabei, dass der apparative Aufwand hierfür möglichst gering bleiben soll. Ferner soll keine nennenswert aufwändigere Software benötigt werden, als dies für Standard-Anwendungen der Fall ist.

Die **Lösung** dieser Aufgabe durch die Erfindung ist verfahrensgemäß dadurch gekennzeichnet, dass das Ausrichten des Werkstücks auf dem Rundtisch folgende Schritte aufweist:
a) Platzieren des Werkstücks auf einer auf dem Rundtisch angeordneten Verstellvorrichtung, die mindestens ein erstes Trägerelement und mindestens ein zweites Trägerelement aufweist, wobei das erste Trägerelement mit dem Rundtisch verbunden ist oder Teil desselben ist, wobei das zweite Trägerelement das Werkstück samt Spannmittel trägt und wobei die beiden Trägerelemente in Richtung senkrecht zur vertikalen Rundtischachse relativ zueinander verschieblich gemacht werden können;
b) Positionieren der beiden Trägerelemente relativ zueinander in eine Referenzposition;
c) Messen der Lage und Größe der Exzentrizität des Werkstücks, insbesondere einer Referenzfläche des Werkstücks, zur vertikalen Achse mittels eines in die Werkzeugmaschine integrierten Sensors;
d) Verschieben des zweiten Trägerelements relativ zu dem ersten Trägerelement in eine Richtung senkrecht zur vertikalen Achse durch einen Aktuator, so dass die Größe der Exzentrizität minimiert wird;
e) Durchführung der spanenden Bearbeitung des Werkstücks.

Der Erfindungsgedanke stellt also darauf ab, dass das Werkstück zwar genau zur vertikalen Achse des Rundtisches ausgerichtet wird, dass dies jedoch unter Einsatz einer Verschiebevorrichtung erfolgt, die eine Relativverschiebung zwischen dem Rundtisch und dem Werkstück zulässt. Wesentlich ist ferner, dass ein Aktuator eingesetzt wird, der die genaue Positionierung vornimmt, so dass die Voraussetzung dafür gegeben ist, dass das Verfahren vollautomatisch ablaufen kann; ein personeller Einsatz ist gar nicht mehr nötig oder jedenfalls stark begrenzt.

Der Erfindungsvorschlag ist insbesondere beim Verzahnungsschleifen vorgesehen, bei dem mindestens eine Verzahnung am Werkstück um die vertikale Achse ausgerichtet bearbeitet wird.

Eine Fortbildung des Verfahrens sieht vor, dass vor der Durchführung des obigen Schritts d) das erste Trägerelement relativ zum zweiten Trägerelement in Richtung senkrecht zur vertikalen Achse verschieblich gemacht wird und dass nach der Durchführung des Schritts d) das zweite Trägerelement relativ zum ersten Trägerelement in Richtung senkrecht zur vertikalen Achse geklemmt wird. Zwecks Verschiebung des Werkstücks senkrecht zur Vertikalachse wird also die Verschiebebewegung zeitweise ermöglicht, für die Bearbeitung selber dann aber blockiert.

Als Aktuator kann ein Bearbeitungswerkzeug der Werkzeugmaschine verwendet werden, insbesondere eine Schleifscheibe zur Bearbeitung der Verzahnung oder einer Sitzfläche des Werkstücks (wellenförmiger Lagersitz, Bohrung). Hiermit ist es in vorteilhafter Weise möglich, den Erfindungsgedanken sehr kostengünstig umzusetzen, da für die Ausrichtbewegung eine ohnehin vorhandene NC-Achse der Werkzeugmaschine eingesetzt wird.

Nach der Durchführung der obigen Schritte c) und d) und vor der Durchführung des Schritts e) können sich die Schritte c) und d) mindestens einmal wiederholen. Hiermit ist es möglich, eine präzise Ausrichtung in mehreren Iterationsschritten zu bewerkstelligen und so ein besonders genaues Justierergebnis zu erhalten.

Die erfindungsgemäße Werkzeugmaschine zum spanenden Bearbeiten eines Werkstücks hat einen Rundtisch, auf dem ein Werkstück angeordnet werden kann, wobei der Rundtisch um eine vertikale Achse drehbar ist, wobei die Werkzeugmaschine weiterhin einen Sensor umfasst, mit dem die Position des Werkstücks auf dem Rundtisch bezüglich Lage und Größe einer Exzentrizität relativ zur vertikalen Achse erfasst werden kann. Erfindungsgemäß ist vorgesehen, dass die Werkzeugmaschine weiterhin eine Verstellvorrichtung umfasst, die mindestens ein erstes Trägerelement und mindestens ein zweites Trägerelement aufweist, wobei das erste Trägerelement mit dem Rundtisch verbunden ist oder Teil desselben ist und wobei das zweite Trägerelement das Werkstück trägt, wobei das zweite Trägerelement relativ zum ersten Trägerelement in einer freigegebenen Stellung in Richtung senkrecht zur vertikalen Achse bewegt werden kann und wobei das zweite Trägerelement relativ zum ersten Trägerelement in einer geklemmten Stellung festgelegt ist. Ferner ist vorgesehen, dass die Werkzeugmaschine weiterhin einen Aktuator aufweist, mit dem das zweite Trägerelement relativ zum ersten Trägerelement in eine Richtung senkrecht zur vertikalen Achse bewegt werden kann.

Um vor der Ausrichtung des Werkstücks eine klare Referenzstellung des zweiten Trägerelements relativ zum ersten zu erreichen, sind fortbildungsgemäß Zentriermittel vorhanden, mit denen das zweite Trägerelement relativ zum ersten Trägerelement in freigegebener Stellung in eine Referenzposition bewegt werden kann. Die Zentriermittel sind dabei bevorzugt Federelemente oder sie umfassen dieselben, die in freigegebener Stellung das zweite Trägerelement in die Referenzposition ziehen oder drücken. Besonders bevorzugt ist vorgesehen, dass mindestens drei Federelemente äquidistant um den Umfang der Trägerelemente herum angeordnet sind.

Zwischen den beiden Trägerelementen kann zur Schaffung einer freigegebenen Stellung zwischen den Trägerelementen eine aerostatische oder eine hydrostatische Lagerung angeordnet sein. Damit wird es möglich, fast reibungsfrei die Einrichtbewegung vorzunehmen, was sich insbesondere bei schweren Werkstücken sehr vorteilhaft bemerkbar macht. Zwischen den beiden Trägerelementen können ferner zur Schaffung einer geklemmten Stellung Klemmmittel angeordnet sein; diese können Federspannelemente umfassen.

Der vorgesehene Sensor kann als Tastelement oder als berührungsloses Element ausgeführt sein. Er ist bevorzugt als integraler Maschinenbestandteil zur Vermessung einer Verzahnung des Werkstücks ausgebildet.

Der Aktuator kann ein Bearbeitungswerkzeug der Werkzeugmaschine sein, wobei spezifisch daran gedacht ist, dass er eine Schleifscheibe zur Bearbeitung der Verzahnung, einer äußeren zylindrischen Fläche oder einer Bohrung des Werkstücks ist.

Mit dem vorgeschlagenen Vorgehen wird erreicht, dass ein nur relativ grob vorzentriertes Werkstück, insbesondere ein Groß-Zahnrad, ohne manuellen Aufwand präzise auf dem Rundtisch der Werkzeugmaschine ausgerichtet werden kann. Hierfür ist praktisch kein Personal erforderlich; die genötigten Maßnahmen können von der Maschinensteuerung autark veranlasst werden.

Die vorgeschlagene Vorrichtung ist hinsichtlich der Teile, die zusätzlich zu der üblichen Ausstattung der Werkzeugmaschine benötigt werden, sehr einfach konzipiert, so dass sie kostengünstig realisiert werden kann.

Mit Vorteil werden erfindungsgemäß für das Ausrichten die bereits ohnehin vorhandenen NC-Achsen der Werkzeugmaschine verwendet, was die Umsetzung des Erfindungskonzepts preisgünstig macht.

In der Zeichnung ist ein Ausführungsbeispiel der Erfindung dargestellt. Es zeigen:
- Fig. 1: die perspektivische Ansicht einer Verzahnungs-Schleifmaschine mit aufgespanntem Werkstück,
- Fig. 2: einen vergrößerten Ausschnitt der Darstellung gemäß Fig. 1, wobei das Werkstück samt Rundtisch und die Schleifscheibe samt Sensor zu sehen ist, und
- Fig. 3: schematisch den Rundtisch der Werkzeugmaschine in der Draufsicht, wobei das noch nicht ausgerichtete und das ausgerichtete Werkstück angedeutet ist.

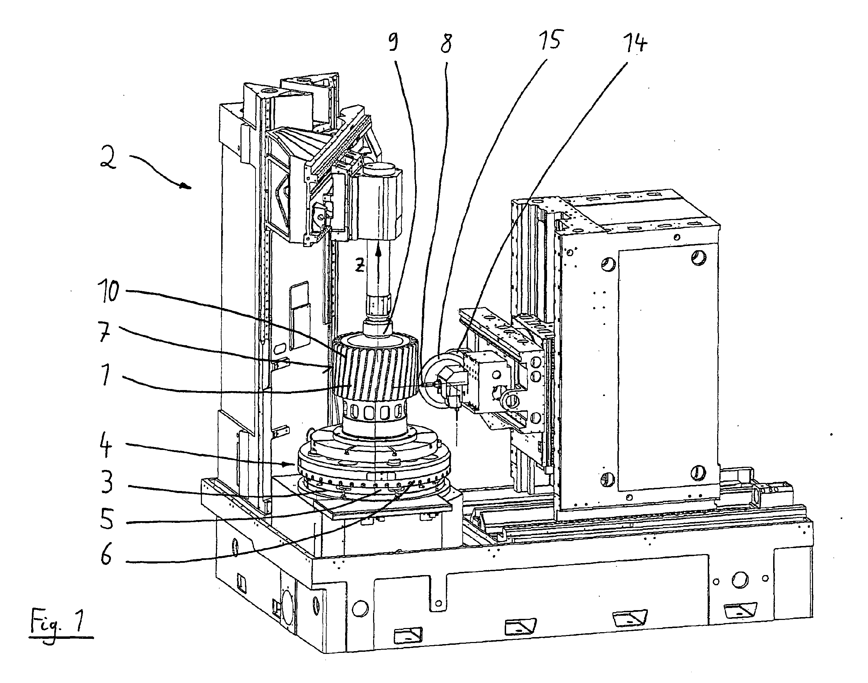

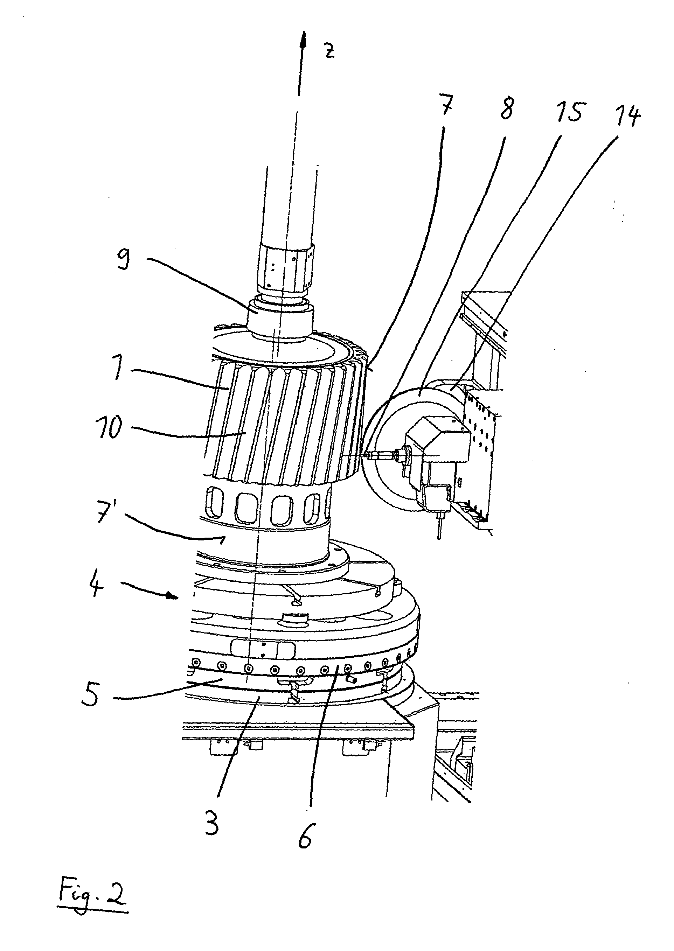

In Fig. 1 und Fig. 2 ist eine Schleifmaschine 2 dargestellt, auf der ein Werkstück 1 in Form eines großen Zahnrades bearbeitet wird. Das Zahnrad 1 hat eine Verzahnung 10, die vorliegend als schräge Außen-Stirnverzahnung ausgebildet ist. Genauso kommt der Erfindungsvorschlag natürlich auch bei sonstigen Verzahnungen zum Einsatz, wobei sowohl Außen- als auch Innenverzahnungen vorgesehen sein können.

Die Schleifmaschine 2 weist einen Rundtisch 3 auf, der eine vertikale Achse, die z-Achse, hat. Das Werkstück 1 wird auf dem Rundtisch 3 platziert, wobei zwecks Erzielung einer präzisen Verzahnung 10 die Achse des Werkstücks und die z-Achse des Rundtisches 3 möglichst identisch sein müssen. Daher wird das Werkstück 1 vor der Bearbeitung auf dem Rundtisch 3 ausgerichtet.

Beim Schleifen selber wird die Verzahnung 10 des Zahnrads 1 vorliegend im diskontinuierlichen Profilschleifverfahren bearbeitet. Hierzu weist die Schleifmaschine 2 eine Schleifspindel 14 auf, auf der eine Verzahnungsschleifscheibe 15 montiert ist. Die rotierende Profilschleifscheibe 15 wird dabei sequentiell durch die einzelnen Zahnlücken der Verzahnung 10 geführt. Die Profilschleifscheibe 15 kann im Betrieb der Schleifmaschine durch ein Abrichtwerkzeug abgerichtet werden.

Zur Ausrichtung des Zahnrads 1 auf dem Rundtisch 3 wird wie folgt vorgegangen:

In einem ersten Schritt wird das Zahnrad 1 auf dem Rundtisch 3 platziert, wobei eine grobe Ausrichtung erfolgt. Der Rundtisch 3 trägt eine Verstellvorrichtung 4, die zwei Trägerelementen 5 und 6 aufweist, die relativ zueinander wahlweise klemmbar oder in Richtung senkrecht zur z-Achse verschiebbar sind.

Dann wird - was in den Figuren nicht dargestellt ist - ein hydrostatisches Lager aktiviert, das das zweite Trägerelement 6 relativ zum ersten Trägerelement 5 lagert, d. h. das zweite Trägerelement 6 ist im aktivierten Zustand der hydrostatischen Lagerung in Richtung senkrecht zur z-Achse relativ zum ersten Trägerelement 5 fast reibungsfrei verschieblich.

Ist das Lager als hydrostatisches Lager ausgebildet, kann über die interne Schleifölzuführung durch geeignet ausgeführte Hydrostatiktaschen im ersten Trägerelement 5 das zweite Trägerelement 6 geringfügig (z. B. ca. 0,015 mm) und sehr parallel ausgehoben werden.

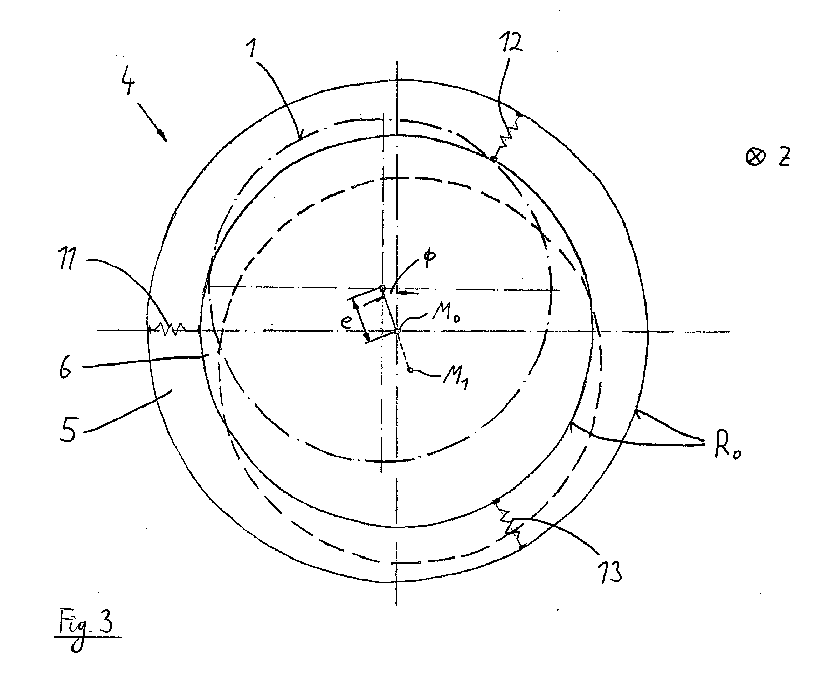

Wie in Fig. 3 gesehen werden kann, sind um den Umfang der beiden Trägerelemente 5, 6 herum mehrere (hier: drei) Federelemente 11, 12, 13 angeordnet, die als Zentriermittel fungieren und dazu führen, dass bei aktivierter hydrostatischer Lagerung das zweite Trägerelement 6 relativ zum ersten Trägerelement 5 eine mittige Referenzposition R₀ einnimmt. Diese Referenzposition entspricht dem Ausgangszustand der Verstellvorrichtung vor Beginn des Ausrichtens.

Ist die Referenzposition R₀ erreicht, wird das hydrostatische Lager wieder deaktiviert. Nunmehr erfolgt ein Messen der Lage und der Größe der Exzentrizität des Werkstücks 1 relativ zur z-Achse, wobei ein Sensor 8, der vorliegend für die Vermessung der Verzahnung 10 ausgebildet ist, eine Referenzfläche 7, 7' abtastet. Bei der Referenzfläche kann es sich um den Außenumfang 7 der Verzahnung 10, die ungeschliffene Verzahnung selber oder auch um eine Lagersitzfläche 7' handeln. Wesentlich ist, dass der Lagewinkel φ der Exzentrizität sowie deren Größe e ermittelt und von der Maschinensteuerung gespeichert wird.

Dann wird wieder das hydrostatische Lager aktiviert. In diesem Zustand kann das zweite Trägerelement 6 relativ zum ersten Trägerelement 5 in eine Richtung senkrecht zur vertikalen Achse z verschoben werden, wobei die Verschiebebewegung entgegen der gemessenen Lage und Größe der Exzentrizität erfolgt.

In Fig. 3 ist dies illustriert: Das zunächst auf dem zweiten Trägerelement 6 platzierte Werkstück 1 ist mit stark übertriebener Exzentrizität mit strichpunktierter Linie angedeutet. Damit liegt das Zahnrad 1 mit der Exzentrizität e von der z-Achse entfernt, wobei durch die Messung mittels des Sensors 8 neben dem Zahlenwert von e auch der Lagewinkel φ bekannt ist. Die Verschiebung des zweiten Trägerelements 6 relativ zum ersten Trägerelement 5 erfolgt derart, dass der zunächst in der Referenzposition R₀ eingenommene Mittelpunkt M₀ des zweiten Trägerelements 6 in den Mittelpunkt M₁ verschoben wird. Wie zu sehen ist, erfolgt die Verschiebung entsprechend der Lage und Größe der Exzentrizität. Die Folge ist, dass das zweite Trägerelement 6 nach der Verschiebung in der gestrichelten Lage zu liegen kommt; das Werkstück 1 allerdings ist in dieser Position exakt konzentrisch zur z-Achse angeordnet.

Die Verschiebung des Werkstücks 1 samt zweitem Trägerelement 6 erfolgt, wie in den Figuren 1 und 2 gesehen werden kann, mit einem Aktuator 9, wobei vorliegend hierfür eine Schleifscheibe fungiert, die für das Bohrungsschleifen eingesetzt wird. Es wird zur Verschiebung also eine maschinenintegrierte NC-Achse genutzt, über die exakt die benötigte Verschiebebewegung bewerkstelligt wird.

Bevorzugt wird so vorgegangen, dass nach Ermittlung der Lage φ der Exzentrizität zunächst der Rundtisch 3 so gedreht wird, dass die Verschiebebewegung um den Betrag e in Richtung der linearen Bewegungsachse des Aktuators 9 erfolgen kann, um die benötigte Verstellbewegung zu erzielen.

Ist das Werkstück 1 in der erläuterten Weise ausgerichtet, erfolgt (nach Deaktivierung des hydrostatischen Lagers) die Schleifbearbeitung in bekannter Weise.

Das erste Trägerelement 5 ist dabei bevorzugt ein integraler Bestandteil des Rundtisches 3. Zur sicheren Handhabung ist eine - nicht dargestellte - Klemmvorrichtung vorhanden, mit der das zweite Trägerelement relativ zum ersten geklemmt werden kann, um eine ausreichende Kontaktsteifigkeit, eine Drehmitnahme und eine verrissfreie Klemmung zu gewährleisten.

Infolge der aerostatischen oder hydrostatischen Lagerung (letztere kann mit dem Schleiföl vorgenommen werden) hat die Gewichtskraft des Zahnrads 1 praktisch keine Auswirkung auf den Ausrichtprozess.

Hinsichtlich des Sensors 8 ist bevorzugt vorgesehen, dass dieser sich an einer geeigneten Stelle befindet, so dass der Rundlauffehler an einer werkstückabhängigen Prüffläche bzw. -geometrie berührend oder berührungslos aufgenommen werden kann. Das Messergebnis wird auf die erste Harmonische des Rundlauffehlers reduziert. Das Messergebnis wird der Maschinensteuerung koordinatenbezogen übergeben.

Zur Bewerkstelligung der Verschiebebewegung wird bevorzugt eine senkrecht zur Rundtischachse angeordnete NC-Längsachse der Maschine eingesetzt, wobei der Aktuator 9 als "Schieber" angesprochen werden kann, der die Verschiebebewegung ausführt. Hierbei wird gegebenenfalls zunächst die Berührung zwischen Werkstück 1 und Aktuator 9 geeignet erfasst und danach das ungeklemmte erste Trägerelement 6 definiert gegen die kraftbelastete Vorzentrierung verschoben Der Kontakt des "Schiebers" zum zweiten Trägerelement 6 oder seinen Aufbauten muss den Aushebehub bzw. den Klemmhub ausreichend verrissfrei zulassen.

Für die Vorpositionierung des Werkstücks 1 auf dem Rundtisch 3 muss lediglich beachtet werden, dass die zulässige Abweichung vom angestrebten Ausrichtzustand nicht die maximale Verstellmöglichkeit des zweiten Trägerelements 6 relativ zum ersten Trägerelement 5 überschreitet.

Hinsichtlich der Referenzfläche 7, 7' ist anzumerken, dass bei Verzahnungsschleifmaschinen beispielsweise diese Fläche entweder die noch ungeschliffene Verzahnung, gemessen mit Hilfe eines Messtasters und entsprechender Verzahnungsmesssoftware, oder aber die Lagebestimmungsflächen, also die Lagersitze, sein können.

Die Annäherung des "Schiebers" 9 und das Kontaktieren oder Greifen der vorgesehenen Ansatzfläche für den Aktuator wird durch Berührerkennungs-Maßnahmen über eine geeignete Sensorik überwacht und abgeschlossen.

Die zur Verschiebung vorgesehene Linearachse verschiebt mit geeignetem Geschwindigkeitsprofil das zweite Trägerelement 6 samt Werkstück 1 um den ermittelten Betrag, beginnend von der Berührung durch die Maschinensteuerung in erforderlicher Genauigkeit, vorzugsweise ziehend.

Hat die Linearachse und damit der Spannaufbau (mit ermittelbarem und damit vorhaltbarem Elastizitätseinfluss) die Soll-Position erreicht, wird das zweite Trägerelement 6 geklemmt und senkt sich dabei um den Lagespalt wieder ab.

Ein nachgeschalteter Prüfvorgang analog der obigen Vorgehensweise kann die Endgenauigkeit der Ausrichtung sicherstellen. Gegebenenfalls können Wiederholzyklen gefahren werden, um die Genauigkeit der Ausrichtung zu verbessern, bevor ein Abbruchkriterium erreicht ist.

Alternativ kann vorgesehen werden, dass eine Software den so ermittelten zusätzlich erforderlichen ggf. systematischen Korrekturbetrag als Vorhalt in alle weiteren Ausrichtvorgänge des gleichen Werkstücks mit einrechnet.

### Bezugszeichenliste:

- 1: Werkstück (Zahnrad)
- 2: Werkzeugmaschine (Verzahnungsschleifmaschine)
- 3: Rundtisch
- 4: Verstellvorrichtung
- 5: erstes Trägerelement
- 6: zweites Trägerelement
- 7: Referenzfläche
- 7': Referenzfläche
- 8: Sensor
- 9: Aktuator
- 10: Verzahnung
- 11: Zentriermittel
- 12: Zentriermittel
- 13: Zentriermittel
- 14: Schleifspindel
- 15: Verzahnungsschleifscheibe

- z: vertikale Achse
- R₀: Referenzposition
- φ: Lage der Exzentrizität
- e: Größe der Exzentrizität
- M₀: Mittelpunkt
- M₁: Mittelpunkt

## Patentansprüche

1. Verfahren zum spanenden Bearbeiten eines Werkstücks (1) in einer Werkzeugmaschine (2), wobei das Werkstück (1) auf einem Rundtisch (3) angeordnet und zur spanenden Bearbeitung um eine vertikale Achse (z) des Rundtisches (3) gedreht wird und wobei das Werkstück (1) vor der spanenden Bearbeitung zur Achse (z) des Rundtisches (3) ausgerichtet wird,
**dadurch gekennzeichnet,**
**dass** das Ausrichten des Werkstücks (1) auf dem Rundtisch (3) folgende Schritte aufweist:
a) Platzieren des Werkstücks (1) auf einer auf dem Rundtisch (3) angeordneten Verstellvorrichtung (4), die mindestens ein erstes Trägerelement (5) und mindestens ein zweites Trägerelement (6) aufweist, wobei das erste Trägerelement (5) mit dem Rundtisch (3) verbunden ist oder Teil desselben ist, wobei das zweite Trägerelement (6) das Werkstück (1) trägt und wobei die beiden Trägerelemente (5, 6) in Richtung senkrecht zur vertikalen Achse (z) relativ zueinander verschieblich gemacht werden können;
b) Positionieren der beiden Trägerelemente (5, 6) relativ zueinander in eine Referenzposition (R₀);
c) Messen der Lage (φ) und Größe (e) der Exzentrizität des Werkstücks (1), insbesondere einer Referenzfläche (7, 7') des Werkstücks (1), zur vertikalen Achse (z) mittels eines in die Werkzeugmaschine (2) integrierten Sensors (8);
d) Verschieben des zweiten Trägerelements (6) relativ zu dem ersten Trägerelement (5) in eine Richtung senkrecht zur vertikalen Achse (z) durch einen Aktuator (9), so dass die Größe (e) der Exzentrizität minimiert wird;
e) Durchführung der spanenden Bearbeitung des Werkstücks (1).

2. Verfahren nach Anspruch 1, **dadurch gekennzeichnet, dass** es ein Verzahnungsschleifen ist oder umfasst, bei dem mindestens eine Verzahnung (10) am Werkstück (1) um die vertikale Achse (z) ausgerichtet bearbeitet wird.

3. Verfahren nach Anspruch 1 oder 2, **dadurch gekennzeichnet, dass** vor der Durchführung des Schritts d) gemäß Anspruch 1 das zweite Trägerelement (6) relativ zum ersten Trägerelement (5) in Richtung senkrecht zur vertikalen Achse (z) verschieblich gemacht wird und dass nach der Durchführung des Schritts d) gemäß Anspruch 1 das erste Trägerelement (5) relativ zum zweiten Trägerelement (6) in Richtung senkrecht zur vertikalen Achse (z) geklemmt wird.

4. Verfahren nach einem der Ansprüche 1 bis 3, **dadurch gekennzeichnet, dass** als Aktuator (9) ein Bearbeitungswerkzeug, insbesondere eine Schleifscheibe, der Werkzeugmaschine (2) verwendet wird.

5. Verfahren nach einem der Ansprüche 1 bis 4, **dadurch gekennzeichnet, dass** nach der Durchführung der Schritte c) und d) gemäß Anspruch 1 und vor der Durchführung des Schritts e) gemäß Anspruch 1 die Schritte c) und d) mindestens einmal wiederholt werden.

6. Werkzeugmaschine (2) zum spanenden Bearbeiten eines Werkstücks (1), wobei die Werkzeugmaschine (2) einen Rundtisch (3) umfasst, auf dem ein Werkstück (1) angeordnet werden kann, wobei der Rundtisch (3) um eine vertikale Achse (z) drehbar ist, wobei die Werkzeugmaschine (2) weiterhin einen Sensor (8) umfasst, mit dem die Position des Werkstücks (1) auf dem Rundtisch (3) bezüglich Lage (φ) und Größe (e) einer Exzentrizität relativ zur vertikalen Achse (z) erfasst werden kann, insbesondere zur Durchführung des Verfahrens nach einem der Ansprüche 1 bis 5,
**dadurch gekennzeichnet,**
**dass** die Werkzeugmaschine (2) weiterhin eine Verstellvorrichtung (4) umfasst, die mindestens ein erstes Trägerelement (5) und mindestens ein zweites Trägerelement (6) aufweist, wobei das erste Trägerelement (5) mit dem Rundtisch (3) verbunden ist oder Teil desselben ist und wobei das zweite Trägerelement (6) das Werkstück (1) trägt, wobei das zweite Trägerelement (6) relativ zum ersten Trägerelement (5) in einer freigegebenen Stellung in Richtung senkrecht zur vertikalen Achse (z) bewegt werden kann und wobei das zweite Trägerelement (6) relativ zum ersten Trägerelement (5) in einer geklemmten Stellung festgelegt ist, und
**dass** die Werkzeugmaschine (2) weiterhin einen Aktuator (9) aufweist, mit dem das zweite Trägerelement (6) relativ zum ersten Trägerelement (5) in eine Richtung senkrecht zur vertikalen Achse (z) bewegt werden kann.

7. Werkzeugmaschine nach Anspruch 6, **dadurch gekennzeichnet, dass** Zentriermittel (11, 12, 13) vorhanden sind, mit denen das zweite Trägerelement (6) relativ zum ersten Trägerelement (5) in freigegebener Stellung in eine Referenzposition (R₀) bewegt werden kann.

8. Werkzeugmaschine nach Anspruch 7, **dadurch gekennzeichnet, dass** die Zentriermittel (11, 12, 13) Federelemente sind oder umfassen, die in freigegebener Stellung das zweite Trägerelement (6) in die Referenzposition (R₀) ziehen oder drücken.

9. Werkzeugmaschine nach Anspruch 8, **dadurch gekennzeichnet, dass** mindestens drei Federelemente (11, 12, 13) äquidistant um den Umfang der Trägerelemente (5, 6) herum angeordnet sind.

10. Werkzeugmaschine nach einem der Ansprüche 6 bis 9, **dadurch gekennzeichnet, dass** zwischen den beiden Trägerelementen (5, 6) zur Schaffung einer freigegebenen Stellung zwischen den Trägerelementen (5, 6) eine aerostatische Lagerung angeordnet ist.

11. Werkzeugmaschine nach einem der Ansprüche 6 bis 9, **dadurch gekennzeichnet, dass** zwischen den beiden Trägerelementen (5, 6) zur Schaffung einer freigegebenen Stellung zwischen den Trägerelementen (5, 6) eine hydrostatische Lagerung angeordnet ist.

12. Werkzeugmaschine nach einem der Ansprüche 6 bis 11, **dadurch gekennzeichnet, dass** zwischen den beiden Trägerelementen (5, 6) zur Schaffung einer geklemmten Stellung Klemmmittel angeordnet ist.

13. Werkzeugmaschine nach Anspruch 12, **dadurch gekennzeichnet, dass** die Klemmmittel Federspannelemente umfassen.

14. Werkzeugmaschine nach einem der Ansprüche 6 bis 13, **dadurch gekennzeichnet, dass** der Sensor (8) als Tastelement ausgeführt ist.

15. Werkzeugmaschine nach einem der Ansprüche 6 bis 13, **dadurch gekennzeichnet, dass** der Sensor (8) als berührungsloses Element ausgeführt ist.

16. Werkzeugmaschine nach Ansprüche 14 oder 15, **dadurch gekennzeichnet, dass** der Sensor (8) zur Vermessung einer Verzahnung (10) des Werkstücks (1) ausgebildet ist.

17. Werkzeugmaschine nach einem der Ansprüche 6 bis 16, **dadurch gekennzeichnet, dass** der Aktuator (9) ein Bearbeitungswerkzeug der Werkzeugmaschine (2) ist.

18. Werkzeugmaschine nach Anspruch 17, **dadurch gekennzeichnet, dass** der Aktuator (9) eine Schleifscheibe zur Bearbeitung der Verzahnung (10), einer äußeren zylindrischen Fläche oder einer Bohrung des Werkstücks (1) ist.
